# EUROPEAN PATENT APPLICATION

(11) **EP 3 733 829 A1**
(43) Date of publication of application: **04.11.2020**
(21) Application number: 20162103.4
(22) Date of filing: 10.03.2020
(51) Int. Cl.: C12C 5/00, C12C 7/24, C12C 11/00, C12C 12/00

(54) **METHOD OF ENRICHING BEER COMPOSITION**

(30) Priority: 11.03.2019 CZ 20190136
(71) Applicant: Hydroservis-Union a.s., 37802 Straz nad Nezarkou (CZ)
(72) Inventor: Korbel, Viktor, 37802 Stráz nad Nezárkou (CZ); Hlousková, Nikola, 37802 Stráz nad Nezárkou (CZ); Vainar, Jirí, 37804 Chlum u Trebone (CZ)
(74) Representative: Sedlák, Jirí

(57) **Abstract**

The invention relates to a method of enriching beer composition, which does not adversely affect the sensory properties of beer, which is in accordance with the tradition under the Beer Purity Act, and which enriches beer with health-promoting substances having a positive effect on the organism of beer consumer. The source of health-promoting substances is biomass from freshwater and/or seawater unicellular organisms, which is added to the warm wort after boiling or to the wort in the fermentation vessel.

## Description

### Field of the Invention

The present invention relates to a method of enriching beer composition with health-promoting substances of natural origin for a beneficial effect on the human body, without altering the sensory properties of the beer thus produced compared to beer with non-enriched composition.

### Background of the Invention

Currently, the term beer in the Czech Republic refers to a foaming drink made by fermentation of wort prepared from malt, water, untreated hops, treated hops or hop products, which contains, in addition to the ethanol and carbon dioxide formed by fermentation process, a certain amount of unfermented extract; malt may be replaced up to one third of the total extract of the original wort by an extract, in particular sugar, cereal starch, non-malted cereals or rice; for flavoured beers, the alcohol content may be increased by the addition of spirits or other alcoholic beverages. (Section 16(a) - 248/2018 Coll.)

Beer, as a foodstuff, has beneficial effects on the human body, which is derived from the health-promoting substances contained in the raw materials for beer production. It is well known that beer helps, for example, against insomnia, substances released from hops help with cholesterol degradation, beer drinking is suitable for prevention of kidney stones, etc., but there are still attempts to further enrich beer composition, whether to improve its beneficial effect on the body, or to achieve new colours, tastes and fragrances that would attract new consumers. An example may be the invention of a beer beverage known from the document CZ30619 B6, which discloses admixing of fruit and/or vegetable component into wort for beer production.

Another such known solution is the technical solution of the document CZ24079U1, which presents an algae-barley beer containing extract of barley malt and algae biomass, in particular algae from the genus Chlorella. According to the descriptive part of the invention, the algae serve as a source of carbohydrates to replace from 1% vol. to 20% vol. of barley malt, which is processed by means of the production process for Pilsner-type beers including mashing, lautering, boiling, fermentation and conditioning. The algae are added either to the malt or as the hydrolyzate added to the wort during the boiling process, which has been prepared for 24 hours with the aid of added enzymes for lysis of the cellulose container of algae cells into fermentable sugars. The resulting beer has its own ivy green colour, if not filtered before bottling, it has a characteristic aroma and taste, and exhibits its own bitterness and sharpness. Furthermore, beer contains health-promoting substances resistant to boiling points of water, because they have passed through the boiling process, and which have a beneficial effect on the human body.

The common disadvantage of the above solutions is that, although these are beer beverages or beers according to legislation, in terms of more than 500-year tradition of beer brewing entered in the so-called Beer Purity Act (Reinheitsgebot), it is not a real beer. The Beer Purity Act states that traditional beer should be brewed only from water, from the cereal malt and from hops. Beer beverages and beers according to the above known solutions do not meet this requirement, since they involve the use of other raw materials before the boiling process and therefore, due to their non-traditional production, lose some potential consumers who prefer classic beers and ideally without altered sensory properties.

An example of how to enrich the composition of beer and stay true to tradition is the invention which describes the use of mineral water to produce beer from the patent application CZ 1991-2919 A3. The beer brewed according to the invention contains minerals which do not alter the sensory quality of the beer. A disadvantage of the invention is that the mineral waters promote scale growth in the brewery technology, thereby not only increasing the operation and maintenance costs of the brewery technology, but at the same time their deposition in the scale reduces the mineral concentration in the brewed beer.

The purpose of the present invention is to provide a method of enriching beer composition with health-promoting substances for beneficial effects on the human body, in accordance with the tradition laid down in the Beer Purity Act and in which, during brewing, the health-promoting substances would not be degraded by heat, and which would not impair the sensory and technological properties of the beer by enriching the beer with health-promoting substances.

### Summary of the Invention

The task is solved by developing a method of enriching beer according to the following invention.

In the method of enriching beer composition for beneficial effects on the human body, at least one type of biomass containing at least one health-promoting substance is added to the wort during beer production.

In order to enrich the beer composition, biomass from fresh-water and/or sea-water unicellular organisms with a disrupted cell wall is added to the warm wort after the boiling process and/or during the fermentation of the wort.

The addition of biomass to the warm wort after the boiling process is advantageous because the current wort temperature no longer degrades some of the health-promoting substances contained in biomass, but at the same time the increased wort temperature helps to efficiently extract health-promoting substances from the biomass cells into the wort. The addition of biomass during the fermentation process is advantageous because the intensive fermentation in the wort also affects the sugars contained in the biomass-forming cells, with the fermentation decomposition of the biomass sugars involving the extraction of the health-promoting substances into the fermented wort. In addition, some of these health-promoting substances (especially hydrophobic ones) dissolve directly in yeast-produced ethanol.

Furthermore, it is advantageous that fermentation is a natural process that does not degrade or contaminate the health-promoting substances. In addition, due to the leaching of the health-promoting substances in the warm wort, or the leaching of the health-promoting substances from the biomass cells during the fermentation process of the fermented wort, there is no need to laboratory-prepare concentrates of the health-promoting substances from biomass, thereby saving one of the intermediate steps and economic costs if beer should be enriched from extracts.

Last but not least, it is advantageous that the health-promoting substances from biomass positively stimulate the fermentation process, thereby significantly reducing the technological time required to ferment the wort. This results in shorter fermentation and conditioning times, thus saving the costs associated with cooling of fermentation vessels and lager tanks, and it is also possible to increase beer production without having to renovate the existing brewery or modernize its production technologies.

In a preferred embodiment of the process according to the invention, the biomass is prepared in the form of a suspension with water before the biomass is added to the wort. The water preferably has a temperature in the range from 15°C to 45°C. This is advantageous because the biomass does not clump in a vat of wort, moreover, the biomass is protected from thermal shock when added to the warm wort, which may otherwise degrade some of the substances contained therein, and when added to the cooled wort, the preparation of suspension serves to ensure that the hydrophilic substances contained in the biomass begin to dissolve in the suspension, which then dissolve more readily throughout the wort volume.

It is preferred to carry out a process in which the biomass is added to the wort at a temperature of 90°C and less. A temperature of 90°C and less is suitable for leaching substances contained in biomass without degrading them under high temperature. The optimum temperature range for adding biomass to the warm wort is from 55°C to 75°C. This temperature range has proven to be very gentle and at the same time effective for leaching substances contained in biomass. Preferably, the warm wort can be mixed with the biomass to homogenize the temperature and concentration of biomass throughout the wort volume.

In addition, it is preferred to carry out the process in which the biomass is added to the wort during the separation of the solid residues in the swirl vat. The swirl vat uses the controlled flow of wort to free the wort from solid constituents that remain in the wort even after the wort is drained, when this flow of wort streamlines the leaching process for the health-promoting substances from biomass.

In a preferred embodiment of the method according to the invention, the biomass is formed by cells of at least one unicellular organism of the strain from the group Chlorella, Monodus, Nannochloropsis, Spirulina, Phaeodactylum, Scenedesmus, Dunaliella, Salina. These strains contain human health-promoting substances in their cells and at the same time are proven safe and suitable for the food industry.

Another preferred embodiment of the process according to the invention is one in which the biomass is added in a minimum amount of 1 g per 1 litre of wort. The stated minimum amount contains sufficient health-promoting substances to have a beer with such an enriched composition to have a positive effect on the human body.

In the production of beer, it has been shown that brewer's yeast not only well-decomposes the sugars from biomass, while leaching the health-promoting substances out of the biomass cells, without adversely affecting the fermentation process. On the contrary, by absorbing some of the biomass substances, the fermentation process was accelerated and at the same time, the bitter substances contained in the wort were encouraged, thus underlining the bitter taste of the resulting beer.

The main advantage of the invention is that the beer enriched in the above manner corresponds to the tradition of brewing beer and does not break the so-called Beer Purity Act. The colour or taste of beer with an enriched composition is not affected.

Beer with an enriched composition according to the invented method is advantageous as it can be distributed in a non-violent form of health-promoting substances from unicellular fresh-water or sea-water organisms to consumers who do not enjoy taking, for example, tablet food supplements, but at the same time want to make a good step for their health without having to give up their favourite traditionally tasting beer.

Moreover, it is advantageous that biomass contains, in addition to human health-promoting substances, substances beneficial to nutrition and multiplication of yeast cultures, so that the wort fermentation is more efficient, thus proceeding faster, and hence the wort remains in the fermentation vat for a shorter time. This advantage is particularly economical since it increases the capacity of fermentation room and reduces the production time of enriched beer.

### Example of the invention embodiments

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here.

The organisms of the group Chlorella, Monodus, Nannochloropsis, Spirulina, Phaeodactylum, Scenedesmus, Dunaliella, Salina contain substances, which include mainly minerals, proteins with essential amino acids, polyunsaturated fatty acids, vitamins, photosynthetic pigments (chlorophylls and carotenoids), and enzymes.

For example: Chlorella vulgaris is suitable for enriching beer with the so-called CGF (Chlorella Growth Factor) that contains a group of substances consisting of antioxidants, enzymes, nutrients, vitamins, peptides, betaglucans having beneficial effects on the metabolism of living organisms. In addition, Chlorella cells contain essential amino acids and proteins. The percentage of protein is up to 58%, which is up to 3 times percentage of, for example, beef. Further, for example, Chlorella sp. Y-1 is a rich source of lutein (prevention of cataract), or Monodus subterraneus and Nannochloropsis oculata are a rich source of eicosapentaenoic acid (a beneficial effect on the cardiovascular and immune systems). Further, for example, Spirulina platensis is suitable for its high content of proteins, essential amino acids, B-group vitamins and minerals (lowering cholesterol, hypertension, proper kidney function) or Phaeodactylum tricornutum is a source of fucoxanthin (obesity prevention) and Omega-3 unsaturated fatty acids (EPA, DHA), and Scenedesmus sp. is a suitable source of secondary carotenoids and lecithin (reduces the risk of atherosclerosis, promotes brain activity, helps digestion).

An overview of the content of essential amino acids for Chlorella and Spirulin is given in Table 1.

**Table 1: Percentage of essential amino acids in Chlorella algae and its comparison with Spirulina/Arthrospira cyanobacteria (according to Bedwicke et al. 1984)**

| **Amino acid name** | **Abbreviation** | **% of dry biomass** | | **Main effects** |
|---|---|---|---|---|
| | | ***Chlorella* spp.** | ***Arthrospira* spp.** | |
| Phenylalanine | Phe | 4.03 | **4.97** | against fatigue, depressions, pain, collagen production |
| Histidine | His | 1.55 | **1.77** | essential in childhood |
| Isoleucine | Ile | 4 | **6.03** | against muscle wasting |
| Leucine | Leu | 6 | **8.02** | against pain, healing support |
| Lysine | Lys | **6.09** | 4.59 | against herpes, viruses, collagen and antibody production |
| Methionine | Met | **1.55** | 1.37 | elimination of heavy metals |
| Threonine | Thr | 3.25 | **4.56** | strengthening of immunity, collagen production |
| Tryptophan | Trp | 1.27 | **1.4** | for restful sleep, mental health - serotonin production |
| Valine | Val | 4.58 | **6.49** | Neurotransmitter |

An expert will be able to name other species by routine work for the claimed strains, including analysis with information on the content of substances beneficial to human health.

### Example 1

A suspension made up of 2 kg of disintegrated dried biomass dispersed in 5 litres of water with a temperature of 30°C was poured into 500 litres of wort pumped into a swirl vat for purification of the last solid residues. The biomass was species-composed of the algae Chlorella Třeboň (Chlorella Sp.). At the time of adding the suspension, the wort had a temperature of 72°C in the swirl vat and the temperature gradually decreased to 43°C over 60 minutes. During the stay of the wort in the swirl vat, a tangential inflow was active, causing rotational movement of the wort retained in the swirl vat, creating a sludge cone and agitating the wort. Due to the gradually decreasing temperature and mixing of the wort by rotational swirling movement, the substances leached out of the biomass cells. In addition, a substantial proportion of the cells that survived the disintegration process and which could start to grow in the wort were captured in the sludge cone of the swirl vat.

The wort was further processed according to the proper production procedure for Pilsner-type beer, which includes bottom fermentation in the fermentation vat in the fermentation room using brewer's yeast of Saccharomyces cerevisiae and then traditional conditioning in a controlled environment in lager tanks. The fermentation process was accelerated from 10 days to 3 days of the required time compared to the reference sample of beer without enriched composition. And the conditioning time was reduced from 45 days to 30 days compared to the reference sample of beer.

The colour, aroma and taste of the beer were not negatively affected by the master brewer according to sensory evaluation. The analysis showed that beer contains more than trace amounts of enzymes typical of the strain of Chlorella algae. Furthermore, beer contains more than trace amount of proteins and essential amino acids. Exceeding the trace amount denies the possibility of unintentional contamination.

### Example 2

5 kg of biomass in suspension consisting of 5 litres of water and disintegrated and dehydrated Spirulina platensis cells were added to 500 litres of wort with a temperature of 8°C in the fermentation vat. The fermentation process was reduced from 10 days to 4 days and the maturation period of the young beer was reduced by 6 days compared to the reference sample of beer.

The colour, aroma and taste of the beer were not negatively affected by the master brewer according to sensory evaluation. The analysis showed that the beer contains more than trace amounts of proteins typical of the Spirulina cyanobacterial strain. Exceeding the trace amount denies the possibility of unintentional contamination.

### Example 3

3 kg of biomass composed of Nannochloropsis oculata cells were added to 10 hl of wort with a temperature of 85°C. The biomass was added as a suspension of disintegrated dried cells and water at a temperature of 45°C and a volume of 7 1 so that the temperature difference does not exceed 40°C. Following the cooling of the biomass and its pumping to the fermentation vats, rehydrated brewer's yeast for top fermentation was added in an amount of 1000 g and the suspension of Chlorella Třeboň biomass composed of 2 kg of dried powdered biomass and 6 1 of water with a temperature of 15°C.

The top fermentation took place at a temperature of 20°C for 3 days. The fermentation process was shortened by 6 days compared to the reference sample of beer. The maturation period of the young beer was reduced by 5 days compared to the reference sample of beer.

The colour, aroma and taste of the beer were not negatively affected by the master brewer according to sensory evaluation. The analysis showed that beer contains more than trace amounts of acids and enzymes typical of the Chlorella a Nannochloropsis strains. Exceeding the trace amount denies the possibility of unintentional contamination.

### Industrial applicability

The method of enriching beer composition according to the invention will find its application in the production of beers in the food industry.

## Claims

1. Method for enriching beer composition by adding at least one type of biomass during beer production, **wherein** the biomass from fresh-water and/or sea-water unicellular organisms with a disrupted cell wall is added to the warm wort after the boiling process and/or during the fermentation of the wort.

2. The method of claim 1 **wherein** the biomass is prepared in the form of a suspension with water before the biomass is added to the wort.

3. The method of claim 2 **wherein** the temperature of water for preparation of suspension is in the range from 15°C to 45°C.

4. The method of any of claims 1 to 3 **wherein** the biomass is added to the wort with a temperature of 90°C and less.

5. The method of claim 4 **wherein** the wort temperature is in the range from 55°C to 75°C.

6. The method of any of claims 1 to 5 **wherein** the warm wort is mixed with the addition of biomass.

7. The method of any of claims 1 to 6 **wherein** the biomass is added to the wort during the separation of solid residues in the swirl vat.

8. The method of any of claims 1 to 7 **wherein** the biomass is formed by cells of at least one unicellular organism of a strain of the group Chlorella, Monodus, Nannochloropsis, Spirulina, Phaeodactylum, Scenedesmus, Dunaliella, Salina.

9. The method of any of claims 1 to 8 **wherein** the biomass is added in a minimum amount of 1 g per 1 litre of wort.
